# EUROPEAN PATENT APPLICATION

(11) **EP 1 103 198 A1**
(43) Date of publication of application: **30.05.2001**
(21) Application number: 00123409.5
(22) Date of filing: 02.11.2000
(51) Int. Cl.: A43C 7/00, F16G 11/10

(54) **Locking device for shoelaces**

(30) Priority: 23.11.1999 IT PD990259
(71) Applicant: Zanata S.p.A., 31030 Biadene di Montebelluna (Treviso) (IT)
(72) Inventor: Andretto, Giuseppe, 36025 Noventa Vicentina (Vicenza) (IT); Zanata, Stefano, 31044 Montebelluna (Treviso) (IT)
(74) Representative: Modiano, Guido, Dr.-Ing.

(57) **Abstract**

A locking device (10) for shoelaces, comprising at least one lever-type retention element (14) which is pivoted in a hollow body (11) with a through hole (12) for the passage of a lace to be locked, the retention element being arranged substantially along the lace insertion direction and comprising a first section (15) which lies inside the hollow body and faces contrast means (25) which are monolithic with respect to the hollow body. The first section is monolithic with respect to a second section (16) which protrudes from the hollow body so as to define a release button (17). Elastic means (20) are associated with the lever-type retention element in order to push the first section toward the contrast means; the retention element and the contrast means providing clamp-like locking of a corresponding lace in order to pull the lace in the opposite direction with respect to the insertion direction of the lace.

## Description

The present invention relates to a locking device for shoelaces.

It is known that shoelaces are usually interlocked by means of a knot or loop formed by the user.

However, this locking is not always effective and safe; the risk that the shoe may come undone is in fact rather high, especially if the materials that constitute the laces are slippery and incapable of providing high locking friction.

For this purpose, several locking devices have been conceived which are indeed adapted to close the laces without tying them together.

Despite the variety of their embodiments, such devices are substantially constituted by hollow bodies or blocks in which the lace or laces slide, the lace or laces being associated with means for their reversible locking in preset positions determined by the user.

The locking means act substantially at right angles to the direction in which the lace is inserted or extracted, and therefore locking is not always reliable, especially in shoes which are also used in situations entailing intense stresses.

Moreover, functionality for the action of the user is not always easy and flexibility in relation to the type of shoe and lace is poor.

The aim of the present invention is to provide a locking device for shoelaces which solves the above noted drawbacks, particularly by providing safe and effective locking of the laces in any context of application, even when the shoes are subjected to intense stresses.

Within the scope of this aim, an object of the present invention is to provide a device easy to use for the user both during locking and during release.

Another object of the present invention is to provide a device which is highly flexible in terms of shoe type and of lace type that can be locked.

Another object of the present invention is to provide a device which can optionally be coordinated with the action of similar devices.

Another object of the present invention is to provide a locking device which can be manufactured with conventional technologies and at competitive costs and times with respect to devices having an equal functionality.

These and other objects which will become better apparent hereinafter are achieved by a locking device for shoelaces, characterized in that it comprises at least one lever-type retention element which is pivoted in a hollow body with a through hole for the passage of a lace to be locked, said retention element being arranged substantially along the lace insertion direction and comprising a first section which lies inside said hollow body and faces contrast means which are monolithic with respect to said hollow body, said first section being monolithic with respect to a second section which protrudes from said hollow body so as to define a release button, elastic means being associated with said lever-type retention element in order to push said first section toward said contrast means, said retention element and said contrast means providing clamp-like locking of a corresponding lace in order to pull said lace in the opposite direction with respect to the insertion direction of said lace.

Further characteristics and advantages of the present invention will become better apparent from the following detailed description of some embodiments thereof, illustrated only by way of non-limitative example in the accompanying drawings, wherein:
Figure 1 is a perspective view of a first embodiment of a locking device according to the invention in the released condition;
Figure 2 is a perspective view of the device of Figure 1 in the locking condition;
Figures 3 and 4 are partially sectional views of the device of Figure 1, shown during release and during locking, respectively;
Figure 5 is a perspective view of a device according to the invention in a second embodiment;
Figure 6 is a partially sectional orthographic projection view of the device of Figure 5;
Figure 7 is a perspective view of the device according to the invention, in a third embodiment;
Figure 8 is a partially sectional view of the device of Figure 7;
Figure 9 is a perspective view of the device according to the invention, in a fourth embodiment;
Figure 10 is a sectional view of the device of Figure 9;
Figure 11 is a perspective view of a fifth embodiment of the device according to the invention;
Figures 12 and 13 are sectional views of the device of Figure 11 in two operating conditions.

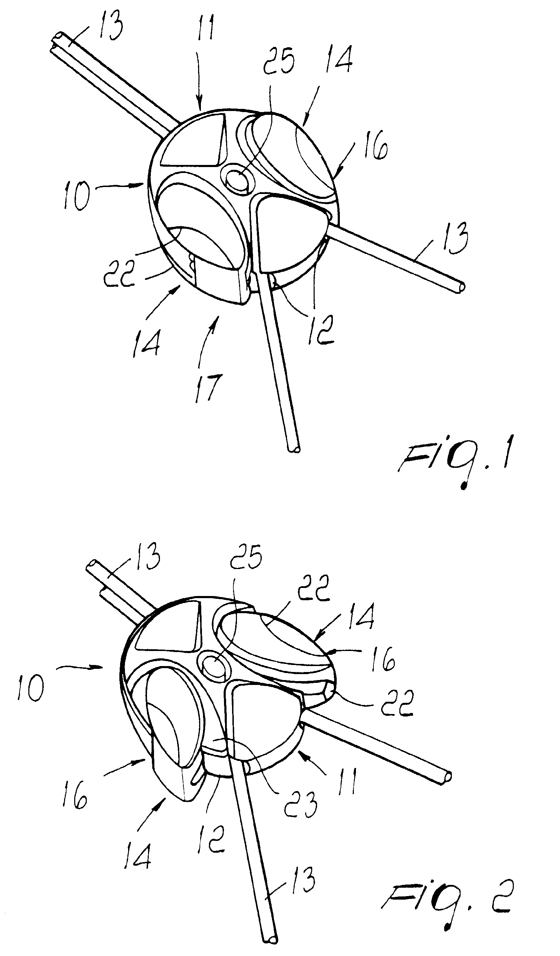

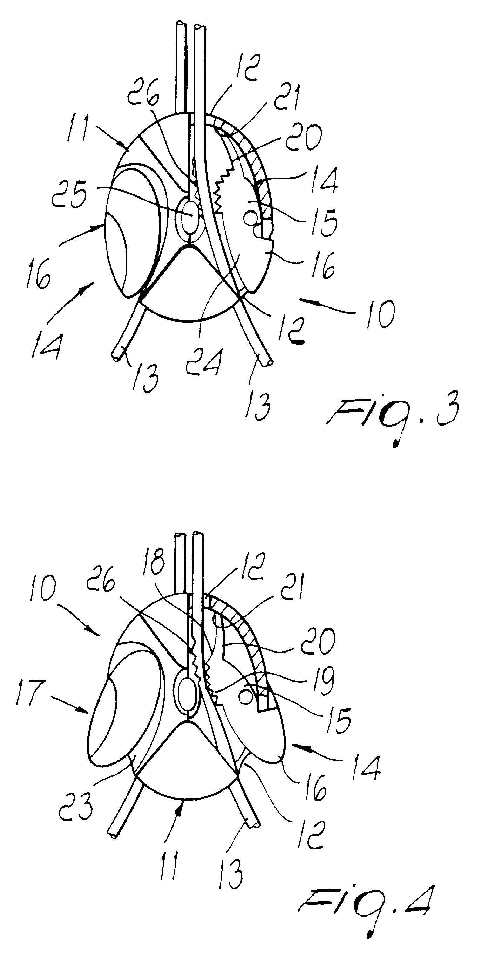

With particular reference to Figures 1 to 4, a locking device for shoelaces according to the invention is generally designated by the reference numeral 10 in a first embodiment.

The device 10 comprises, in this first embodiment, a hollow body 11 with openings 12 for the passage of two laces 13 to be locked.

The device 10 comprises, in this case, two lever-type retention elements 14 which are pivoted within the body 11, are arranged substantially along the lace insertion direction and are mutually opposite and mirror-symmetrical; each retention element is shaped so as to form a first section 15 which, in cooperation with mutually opposite contrast means described in greater detail hereinafter, is suitable to provide the clamp-like locking of a corresponding lace 13, pulling said lace in the opposite direction with respect to the lace insertion direction.

Said first section 15 is monolithic with respect to a second section 16 which protrudes from one of the corresponding openings 12, so as to define a release button which is available to the action of the user and is designated by the reference numeral 17.

Elastic means, also described in greater detail hereinafter and suitable to push the corresponding first section 15 toward the contrast means, are associated with each one of the lever-type retention elements 14.

In particular, the first section 15 has an outer edge 18 which is shaped so as to form a plurality of teeth 19.

The elastic means, in this case, are instead constituted by a laminar tab 20 which protrudes monolithically from the corresponding retention element 14 and whose free end 21, on assembly, rests and pushes against the corresponding internal surface of the body 11.

The second section 16 comprises two outer wings 22 which rest, so as to provide an external guide, on complementarily shaped corresponding external surfaces 23 of said body 11.

The wings 22 are monolithic with respect to a central portion 24 for blending with the first section 15.

The contrast means are constituted, in this case, by a pin 25 which is fixed to the body 11, is arranged transversely to the sliding plane of the laces 13, and is interposed between the two retention elements 14.

The pin 25 is associated with a wall 26 which lies inside the body 11 and is shaped so as to form mutually opposite teeth in abutment with the teeth of corresponding retention elements 14.

In practice, operation is as follows: when the user wishes to slide the device 10 along the laces in order to move it into the intended closure position, he/she compresses the two wings 22, overcoming the resistance of the laminar tab 20, which by yielding elastically allows the separation and therefore disengagement from the interlocked condition of the corresponding first section 15 of the retention element 14.

Once the intended closure position has been reached, the user, by releasing the wings 22, allows the return of the section 15 due to the elastic thrust of the laminar tab 20, thus providing locking.

The locking action is facilitated by the traction of the laces 13 in the opposite direction with respect to the insertion direction, since this tends to turn the retention element 14 toward the contrast means (pin 25).

This situation occurs normally during use of the shoe.

With particular reference to Figures 5 and 6, a locking device for shoelaces according to the invention is generally designated by the reference numeral 100 in a second embodiment.

The device 100 does not differ substantially from the device 10 except for the fact that the contrast means of the two retention elements, here designated by the reference numeral 101 and pivoted within the hollow body 102, are indeed constituted by said retention elements 101, which lock each other with one or two interposed laces, designated here by the reference numeral 103, according to requirements, thus providing the locking and release of said laces.

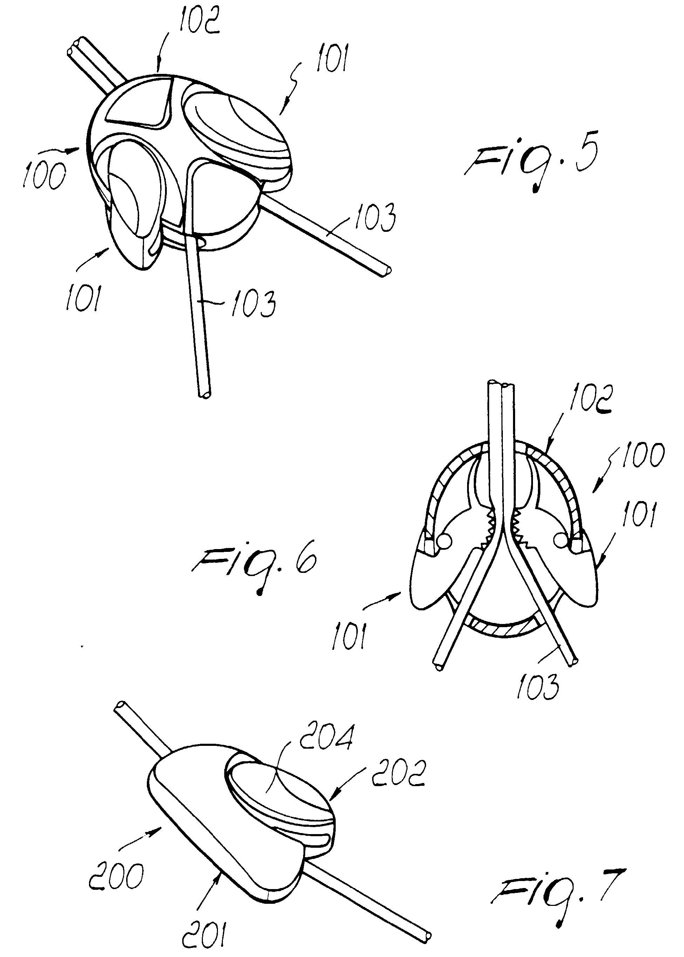

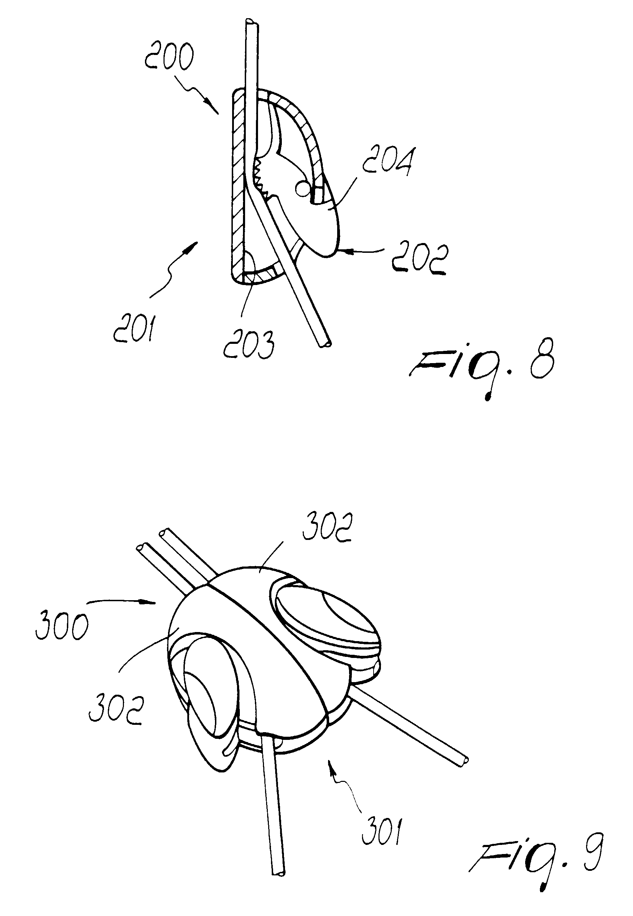

With particular reference to Figures 7 and 8, a locking device for shoelaces according to the invention is generally designated by the reference numeral 200 in a third embodiment.

The device 200 differs from the preceding ones in that the hollow body, designated here by the reference numeral 201, pivotably accommodates a single retention element, designated here by the reference numeral 202, which is fully identical to a corresponding retention element 14 and whose contrast means is constituted by the internal surface of a wall of the body 203 that lies opposite the second section, designated here by the reference numeral 204.

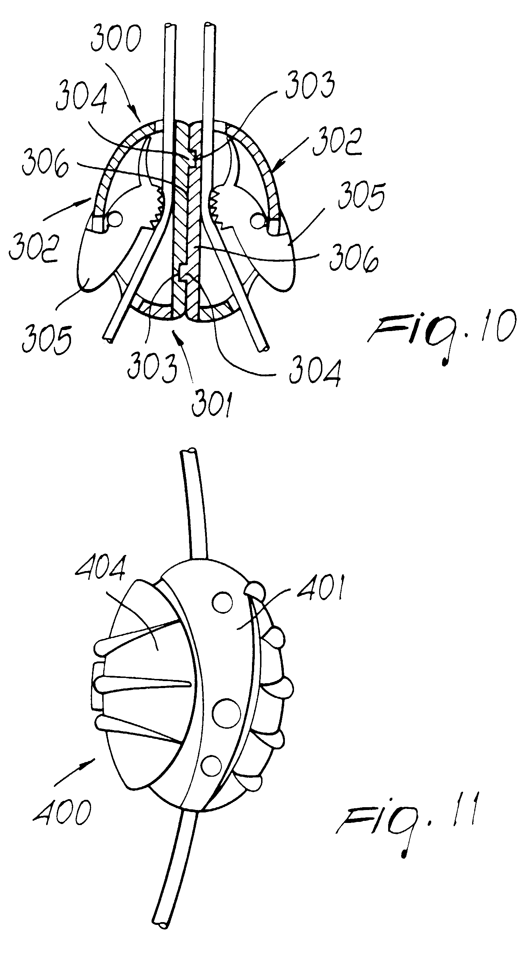

With particular reference to Figures 9 and 10, a locking device for shoelaces according to the invention is generally designated by the reference numeral 300 in a fourth embodiment.

The device 300 comprises a body 301 constituted by two shells 302 which are associated by means of notches and studs, designated by the reference numerals 303 and 304 respectively, each shell being provided for the positioning of a corresponding locking element, designated here by the reference numeral 305, which is fully similar to the blocks described in the first embodiment.

In this fourth embodiment, the abutment means are constituted by the walls, designated by the reference numeral 306, that connect the two shells 302.

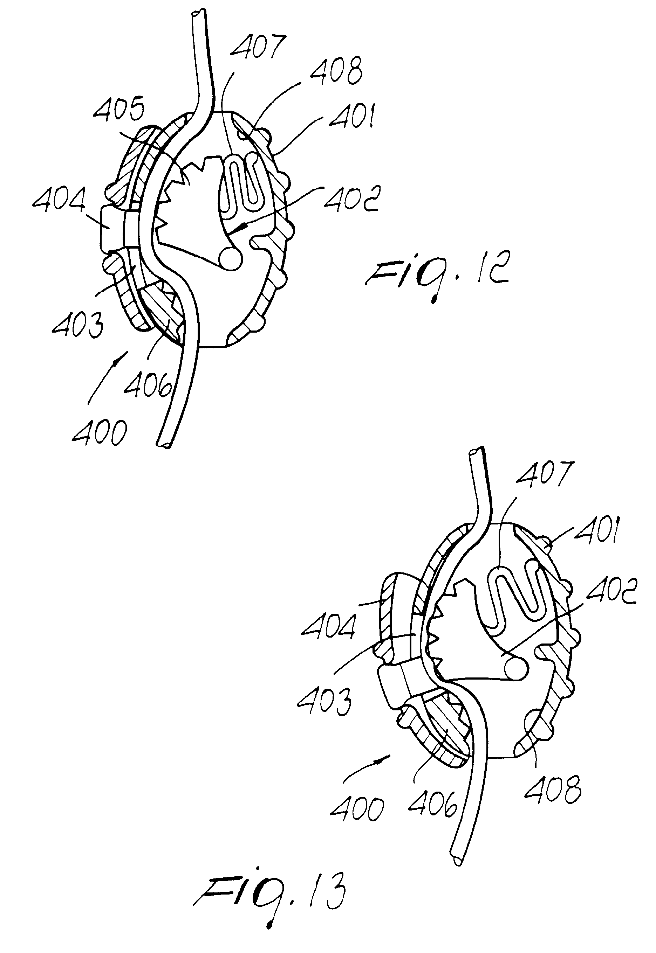

With particular reference to Figures 10 to 12, a locking device for shoelaces according to the invention is generally designated by the reference numeral 400 in a fifth embodiment.

The device 400 comprises a hollow body, here designated by the reference numeral 401, which pivotably accommodates a single retention element 402.

The hollow body 401 is provided with a lateral opening 403 for the protrusion of a second section 404 of the retention means 402, whose corresponding first section 405 faces a wall 406 of said hollow body 401 provided with a lateral opening 403.

The wall 406 constitutes the contrast means for the retention means 402.

The elastic means is constituted by a flat spring 407 which protrudes monolithically with respect to the retention element 402 and whose free end rests and pushes against the internal wall 408 of the hollow body 401 that lies opposite the wall 406.

In practice, it has been observed that the present invention has achieved the intended aim and objects.

Attention is drawn to the simplicity of use of the device according to the invention, said simplicity never detracting from the functional characteristics of resistance during locking.

Attention is also drawn to the fact that traction of the lace in the extraction direction produces a stronger locking action.

It is also noted that the device according to the invention, besides being extremely flexible in application in terms of shoe types, even types subjected to intense stresses, and in terms of lace type, allows to provide models having a high aesthetic/styling value.

It is also noted that its overall extreme structural simplicity ensures mass-production with times and costs which are fully competitive with respect to devices having a similar functionality.

The present invention is susceptible of numerous modifications and variations, all of which are within the scope of the inventive concept.

The technical details may be replaced with other technically equivalent elements.

The materials and the dimensions may be any according to requirements.

The disclosures in Italian Patent Application No. PD99A000259 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A locking device for shoelaces, characterized in that it comprises at least one lever-type retention element which is pivoted in a hollow body with a through hole for the passage of a lace to be locked, said retention element being arranged substantially along the lace insertion direction and comprising a first section which lies inside said hollow body and faces contrast means which are monolithic with respect to said hollow body, said first section being monolithic with respect to a second section which protrudes from said hollow body so as to define a release button, elastic means being associated with said lever-type retention element in order to push said first section toward said contrast means, said retention element and said contrast means providing clamp-like locking of a corresponding lace in order to pull said lace in the opposite direction with respect to the insertion direction of said lace.

2. The device according to claim 1, characterized in that two mirror-symmetrical and mutually opposite retention elements are pivoted inside said body, each element constituting a contrast means for the other one.

3. The device according to claim 1, characterized in that said contrast means are constituted by an element which is rigidly coupled to said body, is arranged transversely to the sliding plane of the laces and is interposed between said retention elements.

4. The device according to claim 1, characterized in that said hollow body has a wall whose corresponding internal portion constitutes said abutment means, with a retention element arranged opposite thereto.

5. The device according to claim 4, characterized in that it comprises two bodies which face said walls, said walls being provided with notches and studs for positioning and fixing.

6. The device according to claims 1 to 5, characterized in that said second section of each retention element protrudes from said hollow body through an opening for the exit of a corresponding lace.

7. The device according to claims 1 to 5, characterized in that said elastic means comprise a laminar tab which protrudes monolithically with respect to said retention element and whose free end rests and pushes against the internal surface of said body which lies opposite the contrast means.

8. The device according to claim 1, characterized in that said hollow body is provided with a lateral opening for the protrusion of said second section of the retention means, whose corresponding first section faces the wall of said hollow body that is provided with a lateral opening constituting said contrast means.

9. The device according to claim 8, characterized in that said elastic means is a spring which protrudes monolithically with respect to said retention element and whose free end rests and pushes against the internal wall of said hollow body which lies opposite said wall provided with a lateral opening.

10. The device according to one or more of the preceding claims, characterized in that said first section is shaped so as to form a plurality of teeth.

11. The device according to one or more of the preceding claims, characterized in that said contrast means are shaped so as to form a plurality of teeth.

12. The device according to one or more of the preceding claims, characterized in that said second section of each retention element extends outward from said hollow body a hood which covers at least partially said body at a corresponding guide for its movement which is formed in said body.
